# EUROPEAN PATENT SPECIFICATION

(11) **EP 2 442 635 B1**
(45) Date of publication and mention of the grant of the patent: **31.07.2013**
(21) Application number: 10725250.4
(22) Date of filing: 11.06.2010
(51) Int. Cl.: A01G 25/06

(54) **IRRIGATION APPARATUS**
BEWÄSSERUNGSVORRICHTUNG
APPAREIL D'IRRIGATION

(30) Priority: 19.06.2009 GB 0910665; 15.02.2010 GB 201002570
(43) Date of publication of application: 25.04.2012
(73) Proprietor: Platipus Anchors Holdings Ltd., Redhill, Surrey RH1 4DP (GB)
(72) Inventor: AGG, Charles, Simon, James, Leigh Reigate, Surrey RH2 8PY (GB); RUSSELL, Michael, Hamilton, Burgess Hill RH15 9XS (GB)
(74) Representative: Pluckrose, Anthony William
(86) International application number: PCT/GB2010/001149
(87) International publication number: WO 2010/146335

(56) References cited:
- DE-U1- 8 906 497
- FR-A1- 2 318 580
- GB-A- 2 232 865
- GB-A- 2 338 879
- US-A- 3 426 544
- US-A1- 2007 252 023

## Description

The present invention relates to irrigation apparatus, in particular irrigation apparatus for watering trees.

When mature or semi-mature trees are first planted then it is important to ensure adequate watering for the first three to five years of the trees' growth. Drought stress is known to be a big contributor to high mortality rates of transplanted trees in their first few years of establishment. Lack of regular watering in early years will cause irreparable damage to a tree. Thus it is known to install an irrigation apparatus surrounding a tree to facilitate watering by maintenance personnel. To date such apparatus has typically comprised a ring of perforated circular section substantially rigid plastic piping buried in ground surrounding the tree, which is filled with water by maintenance personnel, the perforations allowing a slow controlled escape of water from the pipe to the surrounding earth. The piping is either connected at both ends to a water reservoir or at one end to a water reservoir with the other end blocked off by a watertight seal. The reservoir when buried will have an inlet which extends to or above ground level and is accessible to receive water supplied by a maintenance operator, e.g. from a watering hole.

The irrigation apparatus is inefficient since the water tends to flow out of only a small number of the holes in the piping, typically in the lower half of the piping. Thus water does not soak the soil surrounding the whole of the piping. Also the piping is bulky and therefore expensive to transport, due to the substantially rigid plastic piping used.

GB2338879 discloses a self-regulating irrigation system in accordance with the preamble of claim 1.

The present invention provides in a first aspect irrigation apparatus as claimed in claim 1.

The present invention also provides a method, as claimed in claim 14, for installing the irrigation apparatus of claim 1.

The present invention provides apparatus with a conduit which can be rolled up into a compact roll for easy transportation. The conduit can also be easily cut to a desired length by an installer.

Preferred embodiments of the present invention will now be described with reference to the accompanying drawings in which:
Figure 1 is a schematic view of installed irrigation apparatus according to the present invention in use watering a tree;
Figure 2 is a cross-section through the conduit of the Figure 1 apparatus;
Figure 3 is a view of a part of the apparatus of Figure 1, showing a lower part of the reservoir and the two ends of the conduit fixed in place in the lower part of the reservoir;
Figure 4 shows a part of the apparatus of Figure 1 comprising the reservoir and two ends of the conduit;
Figure 5 shows one end of the conduit of the earlier figures protruding through the walls of upper and lower parts of the reservoir of the apparatus;
Figure 6 shows a view from above of irrigation apparatus comprising two reservoirs with connecting conduits;
Figure 7 shows a view from above of three reservoirs with connecting conduits;
Figure 8 shows a view from above of five reservoirs with connecting conduits, arranged in a straight line;
Figure 9 shows a roll of conduit, prior to installation in the apparatus of Figure 1;
Figure 10 is a cross-section through a first alternative conduit suitable for the figure 1 apparatus;
Figure 11a is a plan view of and Figure 11b a cross-section through a bottom part of an alternative version of the reservoir of figure 1;
Figure 12a is a cross-section through and Figure 12b a plan view of a top part of the alternative version of the figure 1 reservoir, the corresponding bottom part of which is shown in figures 11a and 11b;
Figure 13 shows an adapter for use with the irrigation apparatus of Figures 1 to 12a, allowing the easy connection of the irrigation apparatus to a hose to receive a pressurised supply of water;
Figure 14 illustrates a first installation configuration with the conduit of the irrigation apparatus on top of a rootball;
Figure 15 illustrates a second installation configuration with the conduit encircling a rootball and providing a root barrier;
Figure 16 illustrates a cross-section though a second alternative conduit suitable for the Figure 1 apparatus;
Figure 17 illustrates a cross-section through a third alternative conduit suitable for the Figure 1 apparatus;
Figure 18 shows a known surface installed irrigation system; and
Figure 19 shows connection of the Figure 18 irrigation system to irrigation apparatus of the present invention.

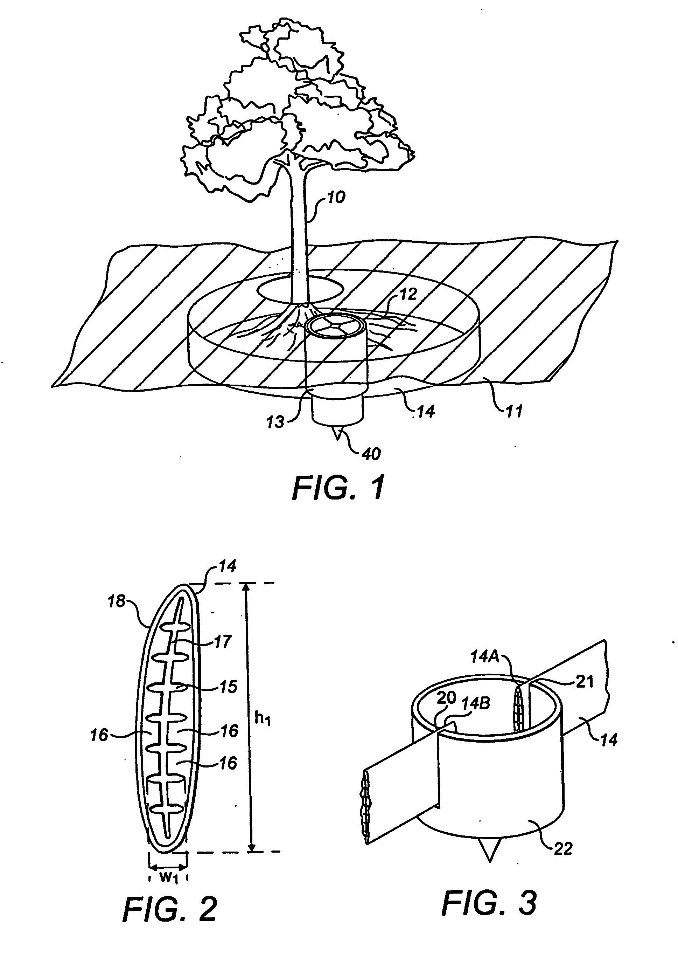

Turning now to Figure 1, there can be seen in the Figure a mature or semi-mature tree 10 planted in earth 11 and having a rootball 12. During planting of the mature or semi-mature tree 10 a pit is dug in the earth 11 which is roughly circular when viewed in plan. The rootball of the mature or semi-mature tree 10 is lowered into the pit and then irrigation apparatus according to the present invention is assembled around the rootball. The irrigation apparatus comprises a reservoir 13 and a conduit 14.

The conduit 14 is a wick drain. This comprises, as can be seen in Figure 2, a prefabricated core 15 of high quality flexible polypropylene, having preformed grooves or water channels 16 on both sides of a central substrate 17. The substrate 17 is a central sheet which has ribs formed on both sides thereof, the ribs running lengthwise along the core, the ribs defining the water channels 16 which run along the length of the conduit. The core 17 is tightly wrapped in a geotextile filter jacket 18 of spun bonded polypropylene, which has very high water permeability while resisting flow thereacross of the finest of soil particles. Both the core 17 and the geotextile filter jacket 18 have high mechanical strength and are also durable in situ in the earth.

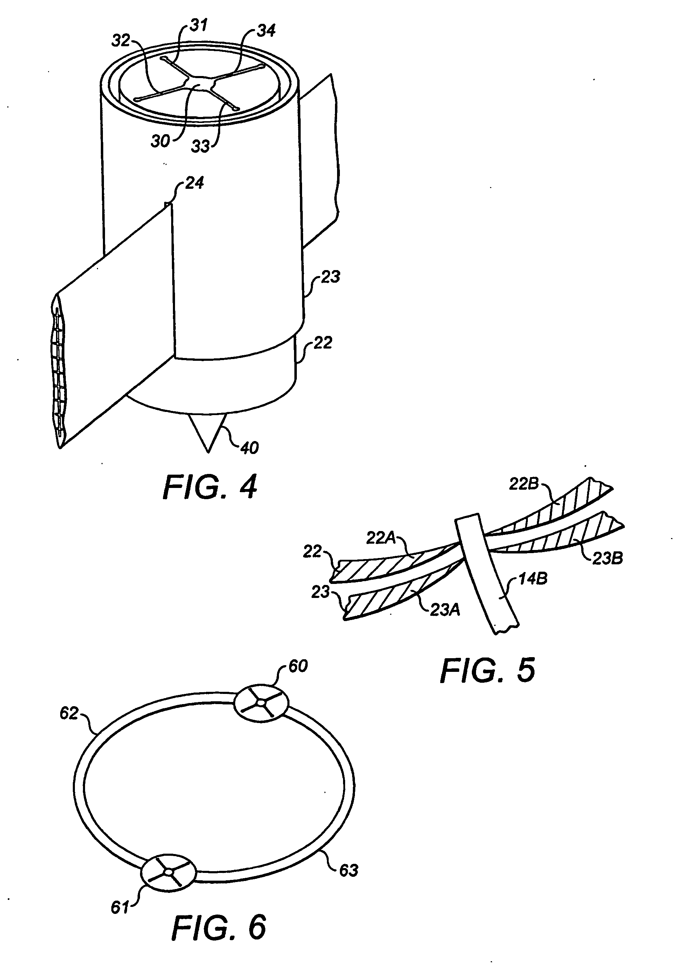

In Figure 3 it can be seen that the ends 14a and 14b of the wick drain conduit 14 extend through slits 20 and 21 in a lower part 22 of the reservoir 13. The longitudinal grooves 16 are exposed to the interior of the lower section 22 of reservoir 13. An upper part 23 of the reservoir 13 is slid over the top of the lower part 22 and the upper part 23 has slits e.g. 24, which slide over the ends of the wick drain 14, as can be seen in Figure 4. The arrangement of slits e.g. 20 extending up to an upper edge of the lower part 22 and slits e.g. 24 extending down to a lower edge of upper part 23 allows variation of the length of a slot aperture formed by alignment of the slits in the upper and lower parts, so the length can be adjusted to match the height of the conduit 14 and a good watertight seal formed.

Figure 5 shows the end 14b of wick drain 14 extending through walls of the upper 23 and lower 22 components. It illustrates a possible, but inessential, variant and shows that the slits in the components 22, 23 are formed by tapering sections 22a, 22b, 23a, 23b which flex as the conduit end 14b is inserted through them in order to provide a watertight seal around the exterior of the conduit 14. The tapered edges 22a, 23a, 22b and 23b flex to allow insertion of the conduit end 14B. Additionally or alternatively, the internal transverse cross-section of the upper part 23 can be made slightly smaller than the external transverse cross-section of the,lower part 24 so that the lower part 22 is compressed at the top part 24 is slid thereover. This compression ensures a good watertight seal between the two parts of the reservoir and between the edges of the slits in the lower part of the reservoir and the conduit lying therebetween. The annular lower edge of the upper part could be tapered to ease the sliding of the upper part over the lower part.

The top part 23 of the reservoir 13 has in it an aperture 30 into which a hose can be inserted. The aperture 30 has four slits 31, 32, 33, 34 extending therefrom which divide the top surface into quadrants, which can flex on the insertion of a hose to allow the hose to be inserted into the reservoir. Although four slits are shown, the top surface could be provided with a fewer or greater number of slits, e.g. 3 to 8, with 4, 6 or 8 slits preferred.

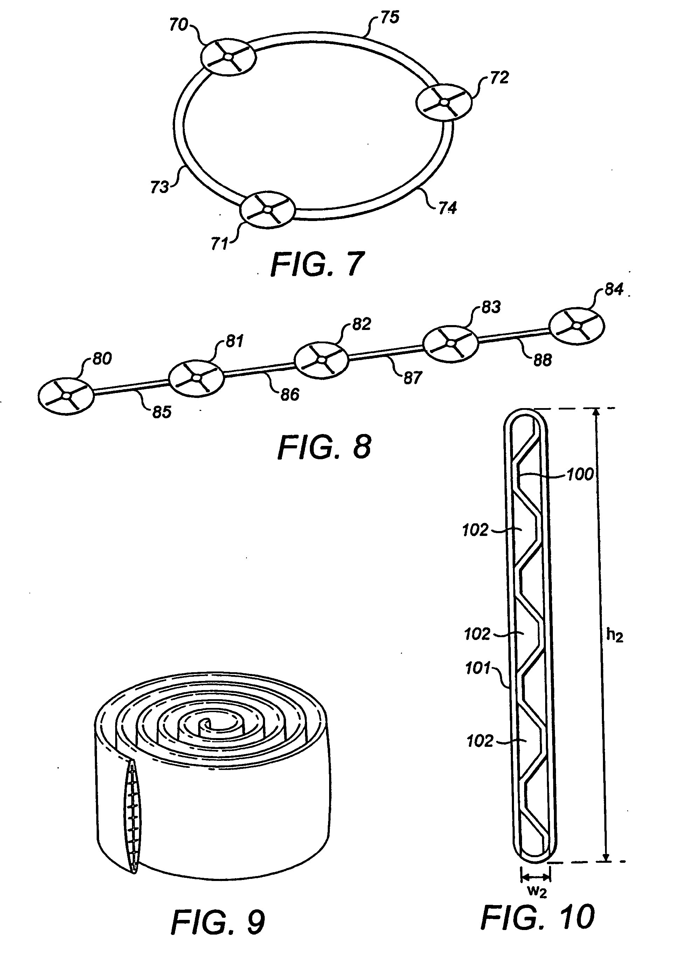

The apparatus of Figure 1 is assembled in the pit when it is dug, by cutting to a desired length a stretch of the wick drain conduit 14. Figure 9 shows how the wick drain conduit is supplied in a roll. The wick drain conduit is unrolled and cut to a desired length and then the two ends are then inserted through the slots in the reservoir as described above.

The reservoir 13 is shown having a bottom spike 40 which will extend below the bottom surface of the pit to fix the reservoir in position, but this is not essential and the reservoir could be formed without a spike and simply placed on the root ball, on the pit bottom or on earth filled in the pit at a point when the rootball has been located in the pit and the pit partially filled. The reservoir will be buried in a way which leaves the top surface of the reservoir 13 exposed when the pit is fully filled with topsoil and/or fertiliser to bed the mature or semi-mature tree 10 in place.

Once the apparatus has been installed as indicated in Figure 1 then periodically a maintenance person can visit the mature or semi-mature tree and insert a water hose into the reservoir 13 to top the reservoir up with water. The water from the reservoir 13 flows round the conduit 14 through the grooves 16 in the conduit 14. Then the porous material of the cover 18 allows water to escape from the conduit 14 at a controlled rate to irrigate the mature or semi-mature tree 10. The mature or semi-mature tree 10 would be irrigated typically weekly for the first two years of growth in hot weather, following which it should be well established. The irrigating water passes through the jacket around the complete circumference of the jacket to irrigate soil surrounding the jacket.

The irrigation apparatus shown in Figure 1 has only one reservoir 13, but variants could be constructed with two reservoirs, e.g. for use with larger trees, as shown in Figure 6. In Figure 6 two reservoirs 60 and 61 are shown connected by two wick drain conduits 62 and 63. One end of the conduit 62 will extend through slots in the reservoir 60 and the other end of the conduit 62 will extend through slots in the reservoir 61. Similarly one end of the conduit 63 will extend through slots in the reservoir 60 and the other end of the conduit 63 will extend through slots in the reservoir 61. Water can then be added to both reservoirs 60 and 61 to flow through the conduits 62 and 63 to irrigate a plant or tree.

In a further arrangement shown in Figure 7 there are three reservoirs 70, 71 and 72, e.g. for use with larger trees. The reservoirs 70 and 71 are connected by a section 73 of wick drain conduit, one end of which extends through slots in the reservoir 70 and the other end of which extends through slots in the reservoir 71. A section 74 of wick drain conduit extends between the reservoirs 71 and 72 with one end of the conduit section 74 extending through slots in the reservoir 71 and the other end of the conduit section 74 extending through slots in the reservoir 72. Similarly a section 75 of wick drain conduit extends between the reservoirs 70 and 72, with one end of the conduit section 75 extending through slots in the reservoir 70 and the other end extending through slots in the reservoir 72. Each of the three reservoirs 70, 71 and 72 will be periodically topped up with water, which will flow through the conduit sections 73, 74 and 75.

Above in all embodiments the conduit is arranged in a circle (when viewed in plan) around a planted tree. This need not be the case, however, and in Figure 8 there can be seen an arrangement in which there are five reservoirs 80, 81, 82, 83 and 84 arranged in a line with stretches of conduit 85, 86, 87 and 88 extending between them, e.g. for irrigating a line of trees or a hedgerow. The reservoir 80 will be provided with slots only on one side through which one end of the conduit stretch 85 will extend. The reservoir 81 will have slots on both sides to receive one end of the conduit stretch 85 and one end of the conduit stretch 86. The reservoir 82 will similarly have two slots to receive an end of the conduit stretch 86 and on the other side an end of the conduit stretch 87. The reservoir 83 will also have a pair of slots to receive on one side the end of a conduit stretch 87 and on the other side the end of a conduit stretch 88. The reservoir 84 will have a slot only on one side to receive an end of the conduit stretch 88. All of the reservoirs 80-84 will be topped up with water periodically to allow water flow through the conduit stretches 85-88, the water then seeping through the permeable covers of the conduits 85-88 to irrigate plants planted on either side of the stretch of conduits.

Whilst above a particular configuration of preferred reservoir has been illustrated and discussed, different configurations of reservoir are possible, e.g. formed in one part rather than in two parts. It is preferred that the reservoirs are each blow moulded out of plastic, but other materials can be used.

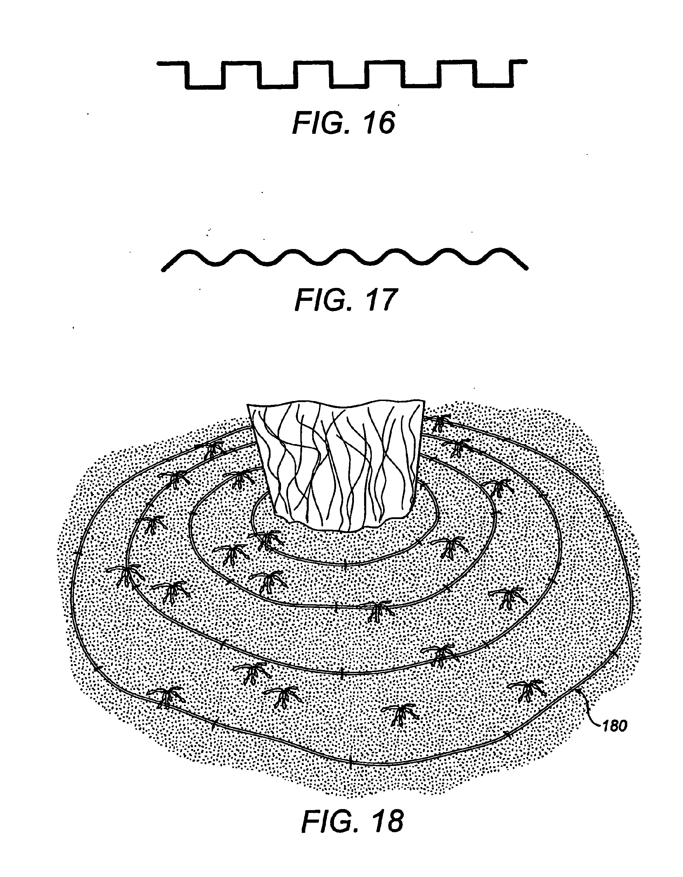

Whilst above the wick drain is shown in Figure 2 with a core of a particular configuration, other configurations are possible. For instance, the core could comprise a corrugated sheet, for instance a sinusoid corrugated plastic sheet could be used as the core, as illustrated in Figure 17, or a core 100 with trapezium shaped elements as illustrated in Figure 10, surrounded by a jacket 101. The corrugated sheet providing core 100 has grooves 102 which provide water channels running lengthwise along the conduit. The dimensions h1, h2 of Figures 2, 10 (being the largest dimensions of the cross-section of the core, the widths) will vary from product to product, to suit different watering requirements. One example is 50mm (approximately), another is 100mm (approximately).

In each variant of wick drain used it is preferred that the core when viewed in transverse cross-section (as shown in Figures 2 and 10) has a first dimension along a first axis (a "height", h₁ in Figure 2 and h₂ in Figure 10) which is at least ten times a second dimension along a second axis perpendicular to the first axis (a "width", w₁ in Figure 2 and w₂ in Figure 10). Consequently the core can bend more easily about the first axis (and axes parallel thereto) than the second axis (and axes parallel thereto). A typical depth W₁, W₂ would be 3mm (approximately).

Figure 16 shows core 160 with a square wave section and Figure 17 shows a core 170 with a sinusoidal wave section; both would be suitable replacements for the core of Figure 1.

In all of the embodiments the use of wick drain permits delivery to the site of installation of a compact and relatively lightweight kit, since the wick drain can be delivered in a roll as shown in Figure 9. The wick drain can be easily cut to length by an installer by using scissors rather than any specialist equipment and the fitting of the wick drain into the reservoir or reservoirs is straightforward. The delivered kit simply comprises the reservoir and a roll of wick drain. The wick drain is very durable in situ in the ground and permits delivery of irrigating water at a suitable rate, with water delivered around the complete periphery of the wick drain, not just around a part of the circumference, since the permeable jacket material is fully wetted around the circumference.

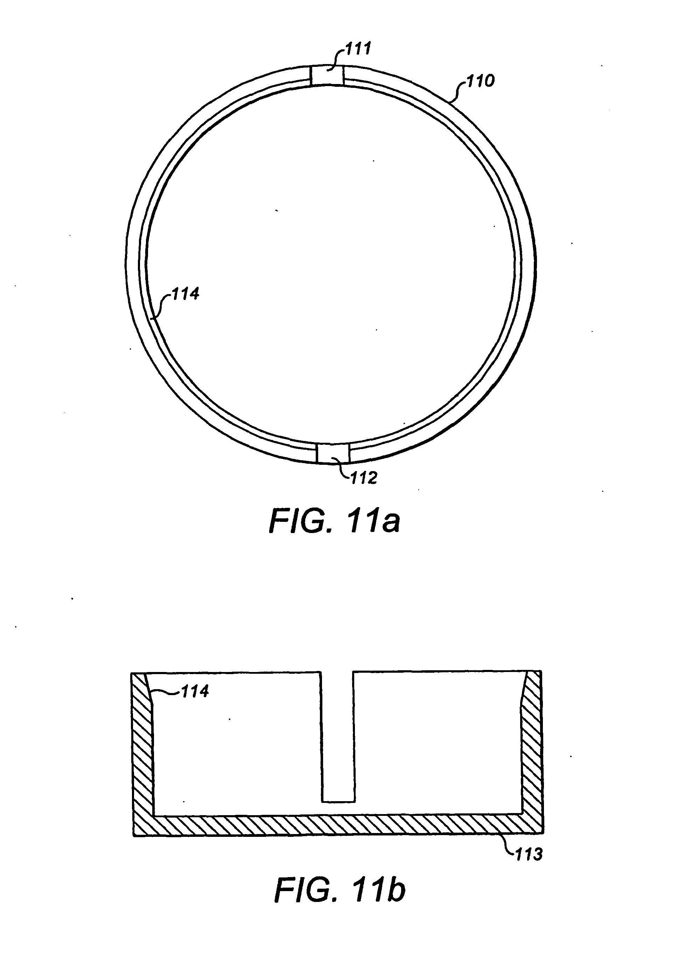

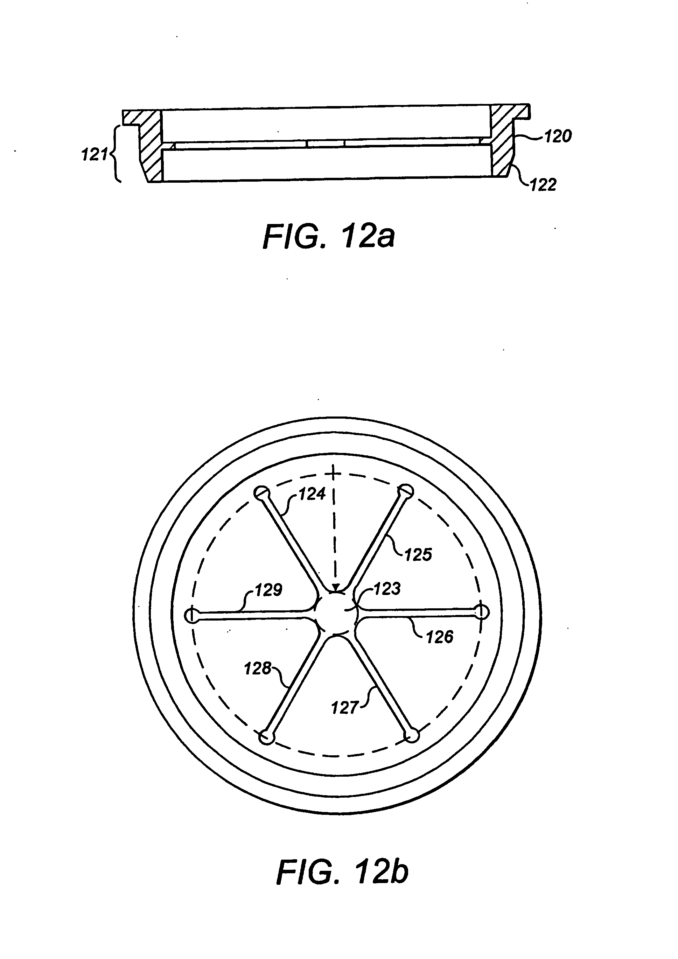

Whilst above each reservoir is shown with an integral cap formed with a hole, for insertion of a hose, and flexible leaves, each reservoir could be formed with a separate cap. This is illustrated in Figures 11a to 12b. Figure 11a is a plan view of a bottom part 110 of an alternative reservoir for use with the figure 1 apparatus. The same component is shown in cross-section in figure 11b. It has slots 111 and 112 for receiving the conduit ends. It has a flat base 113 (without a spike). It is circular when viewed in plan and the upper edge is tapered. It is designed for use with a top part 120 (see Figures 12a, 12b) which has a section 121 which will extend within the bottom part 110 when in use and which has a tapered lower annular edge 122 which engages the tapered upper annular edge on the bottom part 110. The lower edge 122 will also abut top surfaces of the conduit ends in the slots 111 and 112 to ensure a good seal. The top part 120 is provided with a top surface having a central aperture 123 for receiving a hose, from which extends radially outwardly six slits 124-129 which allow the top surface to flex on insertion and withdrawal of the hose. The top part 120 provides a debris cap restricting earth falling into the reservoir.

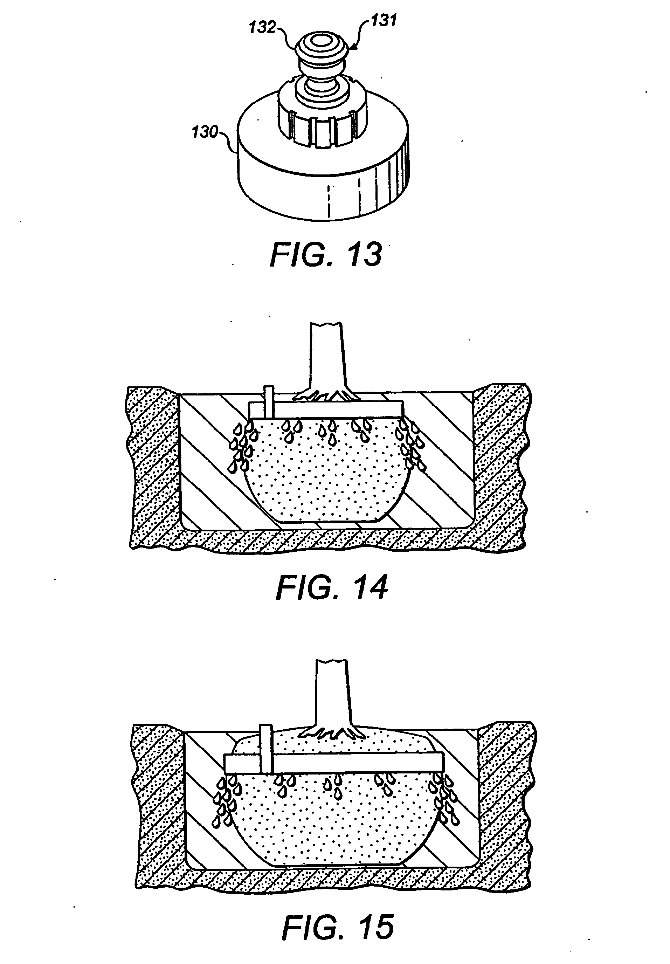

An adapter 130 as illustrated in Figure 13 could be used with the reservoir 110. The adapter 130 comprises a fitting 131 over which an end of a hose can be slid, with a flexible elastomeric O-ring 132 providing a substantially watertight seal between the fitting 131 and the hose. The adapter 130 will form a substantially watertight seal with the reservoir 110 and thus will allow pressurisation of the water in the reservoir 110 and the wick drain connected thereto, the water being pressurised to a pressure approaching the supply pressure in the hose. This allows a rapid drenching of the rootball during irrigation, when the hose is attached in the system, by increasing the rate of water flow. Pressurisation also allows use of longer runs of wick drain material since the pressurised water will flow further along such runs before it is dispersed into the soil, than if gravity feed alone is used.

During a summer period a 6cm girth tree will typically require at least 30 litres of water per month and a semi-mature tree, with a girth of 20cm or more, will need 300 litres of water monthly. The present invention facilitates such watering and provides a targeted irrigation system that delivers water directly to the root zone.

The water supplied to the reservoir runs out in two opposite directions from the reservoir all the way around the circumference of the rootball, drenching the soil laterally. There is minimal water waste, since the system avoids the run off and evaporation losses associated with watering the top of the exposed surface around the soil above the rootball, exposed to the air, because the system is buried. Also the large delivery surface provided by the porous geotexile material lessens the amount of water escaping directly into the bottom of the tree pit, such losses occurring typically with single point watering.

The irrigation apparatus of the present invention is easy to assemble and can easily be tailored to size, by cutting the wick drain to a desired length. The use of the wick drain material (as opposed to traditional substantially rigid piping) allows a compact package for transport, significantly reducing transport costs.

The reservoirs act in use as headers for storage of water to be delivered around the wick drain connected thereto. The reservoirs will be manufactured with a variety of different lengths (different heights when the reservoirs are in use fixed to extend vertically) in order that they can be used for a variety of different tree sizes and, in particular for wick drains buried at a variety of different depths. It is desired that only a small part of a buried reservoir protrudes from the top part of the soil. It can be seen in Figure 14 that a smaller length of reservoir is used, for a shallow burial depth of the wick drain, than in Figure 15, where a longer length reservoir is used for a greater burial depth of the wick drain.

Figure 14 shows an arrangement of the irrigation apparatus with the wick drain located on top of the root ball, providing targeted efficient delivery of water to the tree roots. On the other hand, the Figure 15 arrangement of the irrigation apparatus locates the wick drain encircling an outer periphery of the root ball; in this arrangement the wick drain acts as a strategic root barrier, directing the roots down into their ideal growing zone.

The irrigation apparatus of the present invention delivers not only water to the root systems of trees, but also advantageously delivers air directly to the tree roots. The use of wick drain prevents blockages.

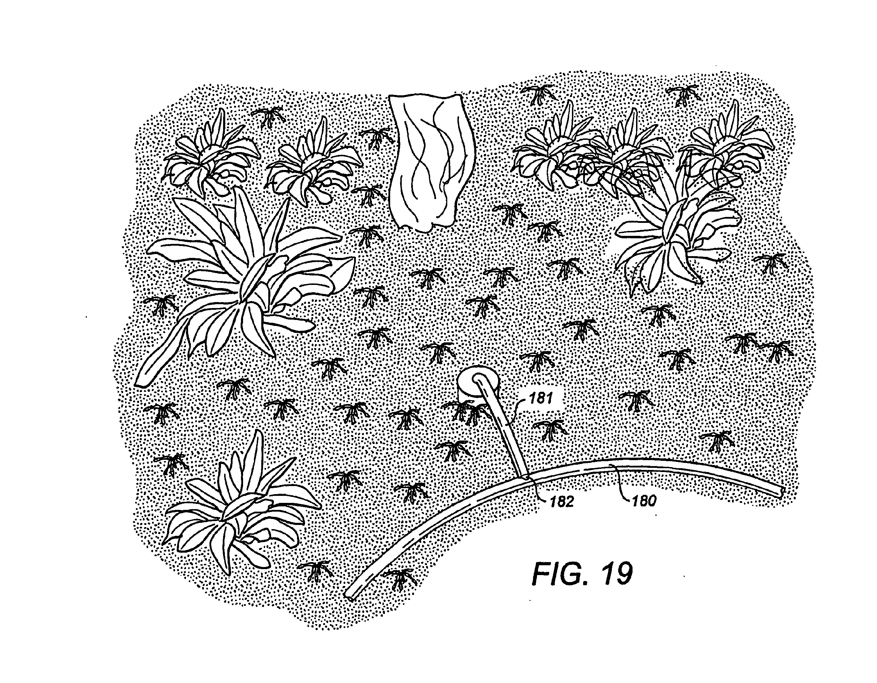

The irrigation apparatus of the present invention can be connected to an existing irrigation system as illustrated in Figures 18 and 19. Figure 18 illustrates a known irrigation system comprising perforated plastic tubing 180 laid in concentric circles about a tree, on top of the soil, in which the tree is planted. The tubing 180 is connected to a pressurised water supply. The supply of water can be controlled by a timer so that pressurised water is periodically supplied to the tree. Figure 19 shows how the tubing 180 can be connected by a branch pipe 181 to irrigation apparatus of the present invention, with the pipe 181 extending through an aperture in a cap of a reservoir, which can be seen in the Figure 19, with the remainder of the reservoir buried in the soil. The tubing 180 has been cut and a T-section 182 inserted, which enables connection of branch pipe 181 to the piping 180. Thus when pressurised water is supplied to piping 180 it is supplied also to the buried irrigation apparatus of the invention. Thus water is supplied both to the top of the soil by the piping 180 and also is supplied below the soil surface by the buried irrigation apparatus.

## Claims

1. Irrigation apparatus comprising:
a reservoir (13) for water and a conduit (14) connected to the reservoir along which water can flow from the reservoir; wherein:
the conduit comprises a flexible core (15) and a water permeable jacket (18) wrapped around the flexible core, the flexible core providing within the jacket one or more channel(s) (16) along which water can flow through the conduit and the water permeable jacket allowing water to permeate from the channel(s) to an exterior surface of the jacket; and **characterized in that**
the core when viewed in a transverse cross-section has a first dimension along a first axis which is at least ten times a second dimension along a second axis perpendicular to the first axis.

2. Irrigation apparatus as claimed in claim 1 wherein the conduit (14) is connected at both ends thereof to the reservoir (13) and defines a flow path for water which is circular when viewed in a plan view.

3. Irrigation apparatus as claimed in claim 1 or claim 2 wherein the jacket (18) is a geotextile filter jacket.

4. Irrigation apparatus as claimed in claim 3 wherein the filter jacket (18) is formed of spunbonded polypropylene.

5. Irrigation apparatus as claimed in claim 1 wherein the core (15) can bend more easily about the first axis than the second axis.

6. Irrigation apparatus as claimed in any one of the preceding claims wherein the conduit (14) comprises a length of wick drain.

7. Irrigation apparatus as claimed in any one of the preceding claims wherein the core (15) comprises a central sheet having ribs formed on both sides thereof, which ribs define the water channels running along the length of the conduit.

8. Irrigation apparatus as claimed in any one of claims 1 to 6 wherein the core (15) comprises a corrugated sheet, with water channels formed by grooves (16) in the sheet.

9. Irrigation apparatus as claimed in any one of the preceding claims wherein the reservoir (13) comprises a container for water having at least one slot for receiving an end of the conduit (14).

10. Irrigation apparatus as claimed in claim 9 wherein the reservoir (13) is formed of two parts (22, 23), each having at least one slit (24) for receiving an end of the conduit (14), a top reservoir part being slidable in or over a bottom reservoir part (22) with slits in the top and bottom reservoir parts aligned.

11. Irrigation apparatus as claimed in claim 10 wherein the top part (23) has an upper surface with an aperture (30) for receiving a water hose and slits extending outwardly from the aperture which allow flexing of the upper surface on insertion and/or withdrawal of the water hose.

12. Irrigation apparatus as claimed in any one of the preceding claims comprising a coupling (31) for coupling the reservoir (13) to a hose, the coupling having sealing means (132) for forming a watertight seal between the coupling and the hose whereby pressurised water can be delivered via the reservoir to the conduit.

13. Irrigation apparatus as claimed in claim 12 wherein the coupling (131) comprises a post having an external diameter matching an internal diameter of the hose and the sealing means (132) comprises an O-ring seal extending around the post, the post having a channel extending therethrough via which water can flow from the hose into the reservoir (13).

14. A method of installation of irrigation apparatus as claimed in any one of claims 1 to 13 comprising:
providing in a roll a length of the flexible core (15) wrapped by the water permeable jacket (18);
forming one or more conduits (14) of (a) desired length(s) by unrolling and cutting the roll;
arranging the one or more cut conduits in a pit surrounding or alongside vegetation to be irrigated;
connecting the one or more conduits to one or more reservoir(s); and
burying the connected conduit(s) and reservoir(s) while leaving exposed above ground a top part of the the/each reservoir.

15. A method as claimed in claim 14 comprising additionally connecting the or at least one reservoir (13) to perforated piping of an above ground watering system.

## Patentansprüche

1. Bewässerungsvorrichtung, die folgendes aufweist:
ein Reservoir (13) für Wasser und eine Leitung (14), die mit dem Reservoir verbunden ist, entlang welcher Wasser aus dem Reservoir fließen kann; wobei:
die Leitung einen flexiblen Kern (15) aufweist und einen wasserdurchlässigen Mantel (18), der um den flexiblen Kern gewickelt ist, wobei der flexible Kern innerhalb des Mantels einen oder mehrere Kanäle (16) bereitstellt, entlang welcher Wasser durch die Leitung fließen kann, und wobei der wasserdurchlässige Mantel ermöglicht, dass Wasser von dem Kanal/den Kanälen aus zu einer äußeren Fläche des Mantels durchdringt; und **dadurch gekennzeichnet, dass**
der Kern, in transversalem Querschnitt betrachtet, eine erste Abmessung entlang einer ersten Achse aufweist, die mindestens zehn Mal so groß ist wie eine zweite Abmessung entlang einer zweiten Achse senkrecht zu der ersten Achse.

2. Bewässerungsvorrichtung nach Anspruch 1, wobei die Leitung (14) an beiden Enden davon mit dem Reservoir (13) verbunden ist und einen Fließweg für Wasser definiert, der in der Draufsicht kreisrund ist.

3. Bewässerungsvorrichtung nach Anspruch 1 oder 2, wobei der Mantel (18) ein geotextiler Filtermantel ist.

4. Bewässerungsvorrichtung nach Anspruch 3, wobei der Filtermantel (18) aus nach dem Spinnvliesverfahren hergestelltem Polypropylen gebildet ist.

5. Bewässerungsvorrichtung nach Anspruch 1, wobei sich der Kern (15) leichter um die erste Achse als um die zweite Achse biegen kann.

6. Bewässerungsvorrichtung nach einem der vorhergehenden Ansprüche, wobei die Leitung (14) eine Länge Wick Drain (vorgefertigte Drainage) aufweist.

7. Bewässerungsvorrichtung nach einem der vorhergehenden Ansprüche, wobei der Kern (15) eine Mittelplatte aufweist, die Rippen aufweist, die auf beiden Seiten davon ausgebildet sind, welche Rippen die Wasserkanäle, die entlang der Länge der Leitung verlaufen, definieren.

8. Bewässerungsvorrichtung nach einem der Ansprüche 1 bis 6, wobei der Kern (15) eine Wellplatte aufweist, wobei Wasserkanäle durch Nuten (16) in der Platte gebildet sind.

9. Bewässerungsvorrichtung nach einem der vorhergehenden Ansprüche, wobei das Reservoir (13) einen Behälter für Wasser aufweist, der mindestens einen Schlitz zur Aufnahme eines Endes der Leitung (14) aufweist.

10. Bewässerungsvorrichtung nach Anspruch 9, wobei das Reservoir (13) aus zwei Bauteilen (22, 23) gebildet ist, wobei jedes mindestens einen Schlitz (24) zur Aufnahme eines Endes der Leitung (14) aufweist, wobei ein oberes Reservoirbauteil in oder über ein unteres Reservoirbauteil (22) verschiebbar ist, wobei Schlitze in den oberen und unteren Reservoirbauteilen bündig sind.

11. Bewässerungsvorrichtung nach Anspruch 10, wobei das obere Bauteil (23) eine obere Fläche mit einer Öffnung (30) zur Aufnahme eines Wasserschlauchs und Schlitze aufweist, die sich nach außen hin von der Öffnung erstrecken, welche ein Biegen der oberen Fläche beim Einfügen und/oder bei der Entnahme des Wasserschlauchs ermöglichen.

12. Bewässerungsvorrichtung nach einem der vorhergehenden Ansprüche, die eine Kupplung (31) zum Kuppeln des Reservoirs (13) an einen Schlauch aufweist, wobei die Kupplung Abdichtmittel (132) zum Bilden einer wasserdichten Abdichtung zwischen der Kupplung und dem Schlauch aufweist, wodurch unter Druck stehendes Wasser über das Reservoir an die Leitung geleitet werden kann.

13. Bewässerungsvorrichtung nach Anspruch 12, wobei die Kupplung (131) eine Stange mit einem Außendurchmesser aufweist, der einem Innendurchmesser des Schlauchs entspricht, und wobei das Abdichtmittel (132) eine O-Ring-Dichtung aufweist, dich sich um die Stange erstreckt, wobei die Stange einen sich dadurch erstreckenden Kanal aufweist, durch welchen Wasser von dem Schlauch in das Reservoir (13) fließen kann.

14. Verfahren zur Montage einer Bewässerungsvorrichtung nach einem der Ansprüche 1 bis 13, das folgendes aufweist:
Bereitstellen in einer Rolle einer Länge des flexiblen Kerns (15), der von dem wasserdurchlässigen Mantel (18) umwickelt ist;
Bilden einer oder mehrerer Leitungen (14) einer gewünschten Länge/gewünschter Längen durch Abrollen und Ablängen der Rolle;
Anordnen der einen oder mehreren abgelängten Leitungen in einer Grube, die zu bewässernde Vegetation umgibt oder längsseits davon verläuft;
Verbinden der einen oder mehreren Leitungen mit einem oder mehreren Reservoir(s); und
Vergraben der verbundenen Leitung(en) und Reservoir(s), während oberirdisch ein oberer Teil des/ eines jeden Reservoirs freigelegt bleibt.

15. Verfahren nach Anspruch 14, das zusätzlich ein Verbinden des oder mindestens eines Reservoirs (13) mit perforierten Leitungen eines oberirdischen Bewässerungssystems aufweist.

## Revendications

1. Appareil d'irrigation comprenant:
un réservoir (13) pour l'eau et un conduit (14) relié au réservoir le long duquel l'eau peut s'écouler depuis le réservoir ; dans lequel :
le conduit comprend une âme souple (15) et une gaine perméable à l'eau (18) enroulée autour de l'âme souple, l'âme souple fournissant à l'intérieur de la gaine un ou plusieurs canaux (16) le long duquel/desquels l'eau peut s'écouler à travers le conduit et la gaine perméable à l'eau permettant à l'eau de s'infiltrer depuis le canal ou les canaux jusqu'à une surface extérieure de la gaine ; et **caractérisé en ce que**
l'âme, lorsqu'elle est vue dans une section transversale, a une première dimension le long d'un premier axe qui est au moins dix fois une deuxième dimension le long d'un deuxième axe perpendiculaire au premier axe.

2. Appareil d'irrigation tel que revendiqué dans la revendication 1, dans lequel le conduit (14) est relié au niveau de ses deux extrémités au réservoir (13) et définit un trajet d'écoulement pour l'eau qui est circulaire lorsqu'il est vu dans une vue en plan.

3. Appareil d'irrigation tel que revendiqué dans la revendication 1 ou 2, dans lequel la gaine (18) est une gaine filtrante géotextile.

4. Appareil d'irrigation tel que revendiqué dans la revendication 3, dans lequel la gaine filtrante (18) est formée de polypropylène filé-lié.

5. Appareil d'irrigation tel que revendiqué dans la revendication 1, dans lequel l'âme (15) peut se plier plus facilement autour du premier axe que du deuxième axe.

6. Appareil d'irrigation tel que revendiqué dans l'une quelconque des revendications précédentes, dans lequel le conduit (14) comprend une longueur de drainage par mèche.

7. Appareil d'irrigation tel que revendiqué dans l'une quelconque des revendications précédentes, dans lequel l'âme (15) comprend une feuille centrale ayant des nervures formées sur ses deux côtés, lesquelles nervures définissent les canaux d'eau s'étendant le long du conduit.

8. Appareil d'irrigation tel que revendiqué dans l'une quelconque des revendications 1 à 6, dans lequel l'âme (15) comprend une feuille ondulée, avec des canaux d'eau formés par des rainures (16) dans la feuille.

9. Appareil d'irrigation tel que revendiqué dans l'une quelconque des revendications précédentes, dans lequel le réservoir (13) comprend un récipient pour l'eau ayant au moins une fente pour recevoir une extrémité du conduit (14).

10. Appareil d'irrigation tel que revendiqué dans la revendication 9, dans lequel le réservoir (13) est formé de deux parties (22, 23), ayant chacune au moins une fente (24) pour recevoir une extrémité du conduit (14), une partie de réservoir supérieure pouvant coulisser dans une partie de réservoir inférieure (22) ou sur celle-ci avec des fentes dans les parties de réservoir supérieure et inférieure alignées.

11. Appareil d'irrigation tel que revendiqué dans la revendication 10, dans lequel la partie supérieure (23) a une surface supérieure avec une ouverture (30) pour recevoir un tuyau d'arrosage et des fentes s'étendant vers l'extérieur à partir de l'ouverture qui permet la flexion de la surface supérieure lors de l'insertion et/ou du retrait du tuyau d'arrosage.

12. Appareil d'irrigation tel que revendiqué dans l'une quelconque des revendications précédentes, comprenant un raccord (31) pour raccorder le réservoir (13) à un tuyau, le raccord ayant un moyen d'étanchéité (132) pour former un joint étanche à l'eau entre le raccord et le tuyau moyennant quoi l'eau sous pression peut être délivrée par l'intermédiaire du réservoir au conduit.

13. Appareil d'irrigation tel que revendiqué dans la revendication 12, dans lequel le raccord (131) comprend un poteau ayant un diamètre externe correspondant à un diamètre interne du tuyau et le moyen d'étanchéité (132) comprend un joint torique s'étendant autour du poteau, le poteau ayant un canal s'étendant à travers celui-ci par l'intermédiaire duquel l'eau peut s'écouler depuis le tuyau dans le réservoir (13).

14. Procédé d'installation d'un appareil d'irrigation tel que revendiqué dans l'une quelconque des revendications 1 à 13, comprenant le fait :
de fournir dans un rouleau une longueur de l'âme souple (15) enroulée par la gaine perméable à l'eau (18) ;
de former un ou plusieurs conduits (14) (a) de longueur(s) souhaitée(s) en déroulant et en coupant le rouleau ;
d'agencer le ou les plusieurs conduits coupés dans une fosse entourant la végétation à irriguer ou le long de celle-ci ;
de relier le ou les plusieurs conduits à un ou à plusieurs réservoirs ; et
d'enfouir le(s) conduit(s) relié(s) et le(s) réservoir(s) tout en laissant exposée au-dessus du sol une partie supérieure du réservoir ou de chaque réservoir.

15. Procédé tel que revendiqué dans la revendication 14, comprenant en outre la liaison du réservoir (13) ou de l'au moins un réservoir (13) à une tuyauterie perforée d'un système d'arrosage au-dessus du sol.
